# EUROPEAN PATENT SPECIFICATION

(11) **EP 4 337 068 B1**
(45) Date of publication and mention of the grant of the patent: **05.03.2025**
(21) Application number: 22727989.0
(22) Date of filing: 11.05.2022
(51) Int. Cl.: A47J 27/04

(54) **MACHINE FOR COOKING FOOD IN A CONTAINER**
MASCHINE ZUM KOCHEN VON LEBENSMITTELN IN EINEM BEHÄLTER
MACHINE POUR LA CUISSON D'ALIMENTS DANS UN RÉCIPIENT

(30) Priority: 12.05.2021 IT 202100012230
(43) Date of publication of application: 20.03.2024
(73) Proprietor: Pastificio Rana S.p.A., 37057 San Giovanni Lupatoto (Verona) (IT)
(72) Inventor: RANA, Gian Luca, 37057 San Giovanni Lupatoto (VR) (IT)
(74) Representative: Studio Torta S.p.A.
(86) International application number: PCT/IB2022/054383
(87) International publication number: WO 2022/238924

(56) References cited:
- WO-A1-2020/212904
- US-A- 4 635 812

## Description

### Technical Field of the Invention

The present invention relates to a machine for cooking food in a container.

In particular, the present invention relates to a machine for cooking food by means of the supply of hot water and steam.

### State of the Art

Within the scope of the quick catering industry, it is known to use machines for cooking fresh food and/or for heating precooked food by means of the use of steam.

Patent applications No. WO 2019/207509, No. WO 2020/212909, No. WO 2020/212207 and No. WO 2020/212904 of the applicant teach how to cook fresh food contained in a container by means of the supply of hot water and steam in the container containing the food.

Document US 4,635,812 discloses a further example of apparatus for controlled, quick and steam heating of pasta and sauce, said apparatus comprising:
- a frame comprising a plate having an upper face and a lower face;
- a dispenser supported by the plate along the lower face and comprising at least one first opening for dispensing steam into the container;
- a support configured to be disposed below the container and to support the container; and
- a mechanism coupled to the plate and to the support and comprising at least one elastic element for pushing the support towards the dispenser; and a command unit for counteracting the force of the elastic element and lowering the support with respect to the plate; and a kinematic assembly configured to hold the dispenser against the container and release said dispenser thanks to a rotative movement of said support/command unit.

In the currently known machines, steam is dispensed into the container by a dispenser at temperatures above 100°C. Consequently, it is necessary to provide a coupling between the container and the dispenser that is stable and solid, so as to prevent undesired steam leakage from the container and that, at the same time, allows a quick replacement of the container, so as to meet the short cooking times required in the quick catering sector.

The object of the present invention is to provide a machine for cooking food that can easily and economically satisfy the needs set out above.

### Subject and Summary of the Invention

According to the present invention, a machine for cooking food in a container according to claim 1 is manufactured.

Thanks to the present invention, it is possible to ensure a solid and stable coupling between the dispenser and the container during the cooking of the food and, at the same time, it is possible to decouple the container from the dispenser so as to allow the replacement of the container in a simple and fast way.

In other words, the mechanism allows keeping the container pressed against the dispenser during the cooking process so as to prevent steam leakage from the container and separating the container from the dispenser, by operating the command unit, once the cooking process is finished.

In particular, the support has a plurality of openings.

In this way, it is possible to reduce the weight of the support and prevent any liquids from accumulating on the support.

In particular, the machine comprises a steam supply duct, which is in fluidic communication with the at least one first opening; and a hot water supply duct, which is in fluidic communication with the at least one second opening.

In this way, it is possible to independently supply steam and hot water respectively to the first opening and to the second opening.

In particular, the mechanism is configured to push the container against the dispenser so as to close an upper opening of the container and to form a substantially closed cooking compartment for cooking the food.

In this way, it is possible to ensure the sealing of the steam inside the container during the cooking process.

In particular, the dispenser comprises a lid configured to close the container, so as to form the substantially closed cooking compartment together with the container.

In particular, the support is movable in a direction substantially parallel to a longitudinal axis.

In this way, it is possible to control by means of the command unit the distance of the container from the dispenser.

In particular, the dispenser extends along the longitudinal axis from the plate towards the support in the space between the plate and the support.

In this way, the dispenser is substantially aligned with the movement direction of the support.

In particular, the mechanism comprises a crossbar, which is movable in a direction substantially parallel to the longitudinal axis and is connected to the kinematic assembly of the connecting rod-crank type; and at least one guide, which extends in a direction parallel to the longitudinal axis and is connected to the movable crossbar and the support.

In this way, it is possible to guide the translatory movement of the crossbar and of the support in a direction substantially parallel to the longitudinal axis.

In particular, the kinematic assembly of the connecting rod-crank type comprises a shaft, which is rotatable about a transverse axis with respect to the longitudinal axis and is connected to the command unit; a crank body jointly coupled to the shaft; and a connecting rod body having a first end hinged to the crank body and a second end hinged to the movable crossbar.

The rotation of the shaft, controlled by the command unit, determines the rotation of the crank body and, consequently, the movement of the connecting rod body. In this way, it is possible to determine the translation of the movable crossbar along the longitudinal axis.

In particular, the elastic element is arranged between the movable crossbar and a blocking element fixed to the frame so as to counteract the movement of the movable crossbar towards the dispenser.

In particular, the mechanism comprises two lateral guides arranged on opposite bands with respect to the dispenser; each lateral guide being a rod comprising a first end connected to the movable crossbar and a second end connected to the support so as to transmit the translatory motion from the movable crossbar to the support.

In particular, the command unit comprises a hand lever so as to allow the support to be lowered manually.

### Brief Description of the Drawings

Further characteristics and advantages of the present invention will become clear from the following description of a non-limiting example embodiment thereof, with reference to the accompanying figures, wherein:
- Figure 1 is a perspective view, with parts removed for clarity, of a machine for cooking food in a container in accordance with the present invention; and
- Figure 2 is a section view of a detail of the machine of Figure 1.

### Detailed Description of Preferred Embodiments of the Invention

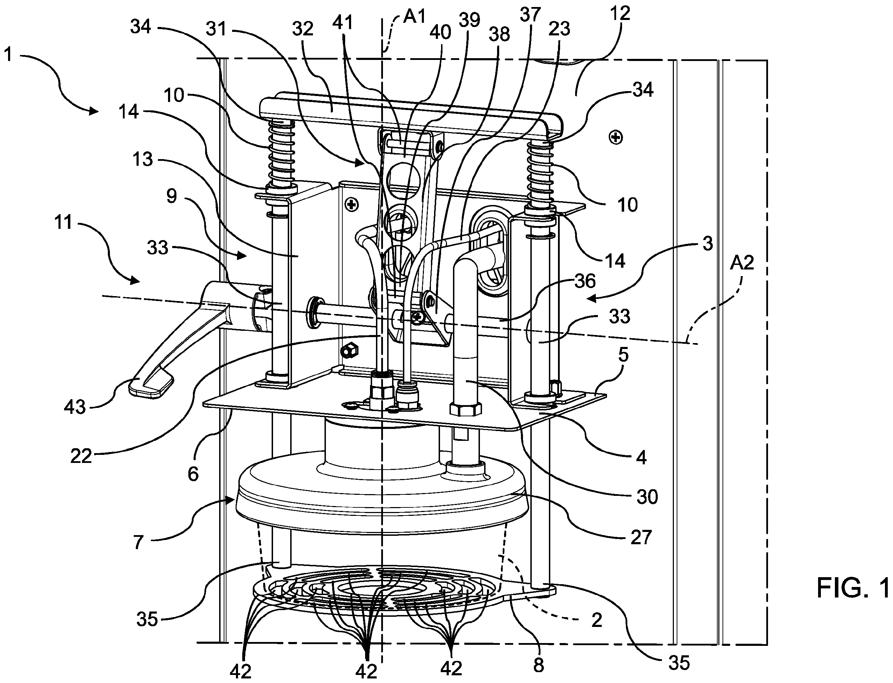

With reference to Figure 1, reference numeral 1 indicates, as a whole, a machine for cooking food in a container 2 containing said food.

The machine 1 can be used in public catering places (for example coffee bars, restaurants, diners etc.) or at home.

In accordance with a non-limiting embodiment of the present invention, the food contained in the container 2 can be a dose of raw pasta or a sauce for said dose of pasta.

The machine 1 comprises a frame 3 comprising a plate 4 having an upper face 5 and a lower face 6; a dispenser 7 supported by the plate 4 along the lower face 6; a support 8 configured to be arranged below the container 2 and to support the container 2; and a mechanism 9 coupled to the plate 4 and to the support 8 and comprising at least one elastic element 10 for pushing the support 8 towards the dispenser 7; and a command unit 11 for counteracting the force of the elastic element 10 and lowering the support 8 with respect to the plate 4.

The frame 3 further comprises a casing 12, within which a first boiler and a second boiler, not shown in the accompanying figures, are arranged for respectively supplying steam and hot water to the dispenser 7; and a bearing 13, which is fixed to the casing 12 above the plate 4 and is provided with two annular-shaped blocking elements 14.

The dispenser 7 extends along a longitudinal axis A1 from the plate 4 towards the support 8 in the space between the plate 4 and the support 8.

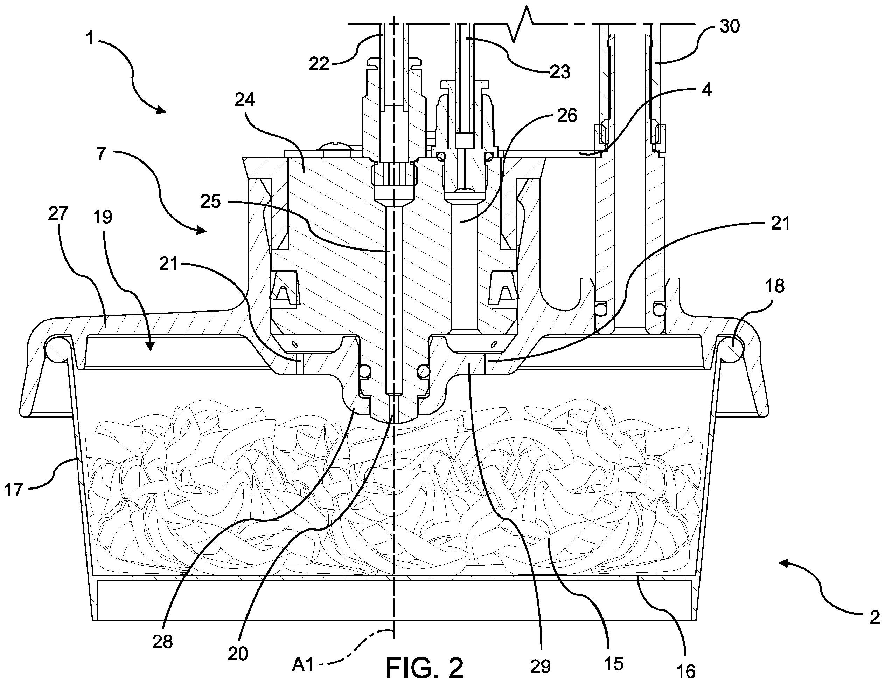

With reference to Figure 2, the container 2 is configured to contain food 15 and comprises a base wall 16, preferably having a circular shape; a side wall 17, preferably slightly flared, provided with an upper edge 18; and an upper opening 19, preferably having a circular shape, opposite the base wall 16.

The dispenser 7 comprises at least one opening 20 for dispensing steam into the container 2 and at least one opening 21 for dispensing hot water into the container 2.

The machine 1 comprises a steam supply duct 22, which is in fluidic communication with the opening 20; and a hot water supply duct 23, which is in fluidic communication with the opening 21.

In the non-limiting case of the present invention described and illustrated herein, the dispenser 7 comprises a central body 24 provided with a steam supply channel 25, which is in fluidic communication with the duct 22 and with the opening 20, and with a hot water supply channel 26, which is in fluidic communication with the duct 23 and with the openings 21; and a lid 27, which is arranged about the central body 24 and is configured to close the upper opening 19 of the container 2 so as to form a substantially closed cooking compartment for cooking the food 15.

In particular, the central body 24 comprises a central protrusion 28, which is provided with the opening 20; and an annular wall 29, which extends about the central protrusion 28 and is provided with a plurality of openings 21.

The machine 1 further comprises a steam evacuation duct 30, which is configured to evacuate steam from the container 2 and is connected to a steam discharge, not shown in the accompanying figures. In particular, the duct 30 extends through the lid 27 so as to put the inside of the cooking compartment into fluidic communication with the steam discharge.

With reference to Figure 1, the mechanism 9 is configured to push the container 2 against the dispenser 7 so as to close the upper opening 19 of the container 2 and to form the substantially closed cooking compartment.

According to the present invention, the mechanism 9 comprises a kinematic assembly 31 of the connecting rod-crank type configured to convert a rotary motion given to the command unit 11 into a translatory motion of the support 8.

More specifically, the mechanism 9 comprises a crossbar 32, which is movable in a direction substantially parallel to the longitudinal axis A1 and is connected to the kinematic assembly 31; and at least one guide 33, which extends in a direction parallel to the longitudinal axis A1 and is connected to the crossbar 32 and the support 8.

In the case described and illustrated herein, the mechanism 9 comprises two lateral guides 33 arranged on opposite bands with respect to the dispenser 7. Each guide 33 extends through a respective opening of the plate 4 and inside the respective blocking element 14. In particular, each guide 33 is a rod comprising an end 34 connected to the movable crossbar 32 and an end 35 connected to the support 8.

The crossbar 32 faces the upper face 5 of the plate 4 and extends in a direction substantially transverse with respect to the longitudinal axis A1.

In particular, the mechanism 9 comprises two elastic elements 10, each of which is arranged between the crossbar 32 and the respective blocking element 14 so as to counteract the movement of the crossbar 32 towards the dispenser 7. In the present case, each elastic element 10 is a coil spring arranged about the respective guide 33.

The kinematic assembly 31 comprises a shaft 36, which is rotatable about a transverse axis A2 with respect to the longitudinal axis A1 and is connected to the command unit 11; a crank body 37 jointly coupled to the shaft 36; and a connecting rod body 38 provided with an end 39 hinged to the crank body 37 and with an end 40 hinged to the crossbar 32.

In particular, the connecting rod body 38 is hinged to the crank body 37 and to the crossbar 32 by means of respective pins 41, which allow the relative rotation between the connecting rod body 38 and the crank body 37 and between the connecting rod body 38 and the crossbar 32.

More specifically, the support 8 is jointly coupled to the crossbar 32 through the guides 33 and is movable in a direction substantially parallel to the longitudinal axis A1. Also, the support 8 has a plurality of openings 42.

In the case described and illustrated herein, the command unit 11 comprises a hand lever 43, configured to be operated by an operator assigned to the machine 1. More specifically, the hand lever 43 is configured to actuate the rotation of the shaft 36.

In use and with reference to Figure 1, an operator operates the command unit 11 by turning the hand lever 43 clockwise. The operation of the command unit 11 determines the rotation of the shaft 36 and of the crank body 37, which in turn moves the connecting rod body 38 and the crossbar 32.

In particular, the end 40 of the connecting rod body 38 describes a translatory motion in a direction substantially parallel to the longitudinal axis A1 towards the plate 4 and drags the crossbar 32 to which it is hinged.

Since the crossbar 32 is connected to the support 8 by means of the guides 33, the translation of the crossbar 32 determines the lowering of the support 8 with respect to the dispenser 7.

At this point the operator places the container 2 containing food 15 on the support 8 and releases the hand lever 43.

Thanks to the action of the elastic elements 10, which determine respective forces on the crossbar 32 in directions substantially parallel to the longitudinal axis A1 and directed upwards, the support 8 is brought back towards the dispenser 7 and the container 2 is pushed with a given pressure against the lid 27 of the dispenser 7. In this way, the dispenser 7 and the container 2 form a substantially closed cooking compartment.

Subsequently, the dispenser 7 dispenses steam and hot water into the container 2 respectively from the opening 20 and from the openings 21 simultaneously and/or according to any sequence so as to cook the food 15 according to a given recipe.

Once the cooking of the food 15 is finished, the operator of the machine 1 operates the command unit 11 again by turning the hand lever 43 so as to lower the support 8 and separate the container 2 from the dispenser 7 allowing the removal of the container 2 from the support 8.

It is evident that variations can be made to the present invention without thereby departing from the scope of protection of the appended claims.

## Claims

1. A machine for cooking food in a container, the machine (1) comprising:
- a frame (3) comprising a plate (4) having an upper face (5) and a lower face (6);
- a dispenser (7) supported by the plate (4) along the lower face (6) and comprising at least one first opening (20) for dispensing steam into the container (2) and at least one second opening (21) for dispensing hot water into the container (2);
- a support (8) configured to be arranged below the container (2) and to support the container (2); and
- a mechanism (9) coupled to the plate (4) and to the support (8) and comprising at least one elastic element (10) for pushing the support (8) towards the dispenser (7); a command unit (11) for counteracting the force of the elastic element (10) and lowering the support (8) with respect to the plate (4); and a kinematic assembly (31) of the connecting rod-crank type configured to convert a rotary motion given to the command unit (11) into a translatory motion of the support (8).

2. The machine as claimed in Claim 1, wherein the support (8) has a plurality of openings (42).

3. The machine as claimed in Claim 1 or 2, and comprising a steam supply duct (22), which is in fluidic communication with the at least one first opening (20); and a hot water supply duct (23), which is in fluidic communication with the at least one second opening (21).

4. The machine as claimed in any one of the foregoing claims, wherein the mechanism (9) is configured to push the container (2) against the dispenser (7) so as to close an upper opening (19) of the container (2) and to form a substantially closed cooking compartment for cooking the food (15).

5. The machine as claimed in Claim 4, wherein the dispenser (7) comprises a lid (27) configured to close the container (2).

6. The machine as claimed in any one of the foregoing Claims, wherein the support (8) is movable in a direction substantially parallel to a longitudinal axis (A1).

7. The machine as claimed in Claim 6, wherein the dispenser (7) extends along the longitudinal axis (A1) from the plate (4) towards the support (8) in the space between the plate (4) and the support (8).

8. The machine as claimed in any one of the foregoing Claims, wherein the mechanism (9) comprises a crossbar (32), which is movable in a direction substantially parallel to the longitudinal axis (A1) and is connected to the kinematic assembly (31) of the connecting rod-crank type; and at least one guide (33), which extends in a direction parallel to the longitudinal axis (A1) and is connected to the movable crossbar (32) and the support (8).

9. The machine as claimed in Claim 8, wherein the kinematic assembly (31) of the connecting rod-crank type comprises a shaft (36), which is rotatable about a transverse axis (A2) with respect to the longitudinal axis (A1) and is connected to the command unit (11); a crank body (37) jointly coupled to the shaft (36); and a connecting rod body (38) having a first end (39) hinged to the crank body (37) and a second end (40) hinged to the movable crossbar (32).

10. The machine as claimed in Claim 8 or 9, wherein the elastic element (10) is arranged between the movable crossbar (32) and a blocking element (14) fixed to the frame (3) so as to counteract the movement of the movable crossbar (32) towards the dispenser (7).

11. The machine as claimed in any one of Claims 8 to 10, wherein the mechanism (9) comprises two lateral guides (33) arranged on opposite bands with respect to the dispenser (7); each lateral guide (33) being a rod comprising a first end (34) connected to the movable crossbar (32) and a second end (35) connected to the support (8).

12. The machine as claimed in any one of the foregoing Claims, wherein the command unit (11) comprises a hand lever (43).

## Patentansprüche

1. Maschine zum Garen von Lebensmitteln in einem Behälter, wobei die Maschine (1) Folgendes umfasst:
- einen Rahmen (3), der eine Platte (4) umfasst, die eine obere Fläche (5) und eine untere Fläche (6) aufweist;
- einen Spender (7), der von der Platte (4) entlang der unteren Fläche (6) gestützt wird und mindestens eine erste Öffnung (20) zur Abgabe von Dampf in den Behälter (2) und mindestens eine zweite Öffnung (21) zur Abgabe von Heißwasser in den Behälter (2) umfasst;
- eine Stütze (8), die so ausgestaltet ist, dass sie unter dem Behälter (2) angeordnet ist und den Behälter (2) stützt; und
- einen Mechanismus (9), der mit der Platte (4) und der Stütze (8) gekoppelt ist und mindestens ein elastisches Element (10) zum Drücken der Stütze (8) hin zu dem Spender (7); eine Befehlseinheit (11) zum Entgegenwirken der Kraft des elastischen Elements (10) und zum Absenken der Stütze (8) in Bezug auf die Platte (4); und eine kinematische Anordnung (31) vom Pleuelstange-Kurbel-Typ, die so ausgestaltet ist, dass sie eine der Befehlseinheit (11) verliehene Drehbewegung in eine Translationsbewegung der Stütze (8) umwandelt, umfasst.

2. Maschine nach Anspruch 1, wobei die Stütze (8) eine Vielzahl von Öffnungen (42) aufweist.

3. Maschine nach Anspruch 1 oder 2, und umfassend einen Dampfzuführungskanal (22), der in Fluidverbindung mit der mindestens einen ersten Öffnung (20) steht; und einen Heißwasserzuführungskanal (23), der in Fluidverbindung mit der mindestens einen zweiten Öffnung (21) steht.

4. Maschine nach einem beliebigen der vorhergehenden Ansprüche, wobei der Mechanismus (9) so ausgestaltet ist, dass er den Behälter (2) gegen den Spender (7) drückt, sodass eine obere Öffnung (19) des Behälters (2) geschlossen wird und ein im Wesentlichen geschlossener Garraum zum Garen der Lebensmittel (15) gebildet wird.

5. Maschine nach Anspruch 4, wobei der Spender (7) einen Deckel (27) umfasst, der so ausgestaltet ist, dass er den Behälter (2) verschließt.

6. Maschine nach einem beliebigen der vorhergehenden Ansprüche, wobei die Stütze (8) in eine Richtung im Wesentlichen parallel zu einer Längsachse (A1) bewegbar ist.

7. Maschine nach Anspruch 6, wobei sich der Spender (7) in dem Zwischenraum zwischen der Platte (4) und der Stütze (8) entlang der Längsachse (A1) von der Platte (4) hin zu der Stütze (8) erstreckt.

8. Maschine nach einem beliebigen der vorhergehenden Ansprüche, wobei der Mechanismus (9) eine Querstrebe (32), die in eine Richtung im Wesentlichen parallel zu der Längsachse (A1) bewegbar ist und mit der kinematischen Anordnung (31) vom Pleuelstange-Kurbel-Typ verbunden ist; und mindestens eine Führung (33), die sich in einer Richtung parallel zu der Längsachse (A1) erstreckt und mit der bewegbaren Querstrebe (32) und der Stütze (8) verbunden ist, umfasst.

9. Maschine nach Anspruch 8, wobei die kinematische Anordnung (31) vom Pleuelstange-Kurbel-Typ eine Welle (36), die in Bezug auf die Längsachse (A1) um eine Querachse (A2) drehbar ist und mit der Befehlseinheit (11) verbunden ist; einen Kurbelkörper (37), der gelenkig an die Welle (36) gekoppelt ist; und einen Pleuelstangenkörper (38), der ein an dem Kurbelkörper (37) angelenktes erstes Ende (39) und ein an der bewegbaren Querstrebe (32) angelenktes zweites Ende (40) aufweist, umfasst.

10. Maschine nach Anspruch 8 oder 9, wobei das elastische Element (10) so zwischen der bewegbaren Querstrebe (32) und einem an dem Rahmen (3) fixierten Sperrelement (14) angeordnet ist, dass es der Bewegung der bewegbaren Querstrebe (32) hin zu dem Spender (7) entgegenwirkt.

11. Maschine nach einem beliebigen der Ansprüche 8 bis 10, wobei der Mechanismus (9) zwei seitliche Führungen (33) umfasst, die an entgegengesetzten Leisten in Bezug auf den Spender (7) angeordnet sind; wobei jede seitliche Führung (33) eine Stange ist, die ein mit der bewegbaren Querstrebe (32) verbundenes erstes Ende (34) und ein mit der Stütze (8) verbundenes zweites Ende (35) umfasst.

12. Maschine nach einem beliebigen der vorhergehenden Ansprüche, wobei die Befehlseinheit (11) einen Handhebel (43) umfasst.

## Revendications

1. Machine pour la cuisson d'aliments dans un récipient, la machine (1) comprenant :
- un cadre (3) comprenant une plaque (4) ayant une face supérieure (5) et une face inférieure (6) ;
- un distributeur (7) soutenu par la plaque (4) le long de la face inférieure (6) et comprenant au moins une première ouverture (20) pour distribuer de la vapeur dans le récipient (2) et au moins une seconde ouverture (21) pour distribuer de l'eau chaude dans le récipient (2) ;
- un support (8) configuré pour être disposé sous le récipient (2) et pour soutenir le récipient (2) ; et
- un mécanisme (9) couplé à la plaque (4) et au support (8) et comprenant au moins un élément élastique (10) pour pousser le support (8) vers le distributeur (7) ; une unité de commande (11) pour contrer la force de l'élément élastique (10) et abaisser le support (8) par rapport à la plaque (4) ; et un ensemble cinématique (31) du type bielle-manivelle configuré pour convertir un mouvement de rotation donné à l'unité de commande (11) en un mouvement de translation y du support (8).

2. Machine selon la revendication 1, dans laquelle le support (8) a une pluralité d'ouvertures (42).

3. Machine selon la revendication 1 ou 2, comprenant un conduit d'alimentation en vapeur (22), qui est en communication fluidique avec l'au moins une première ouverture (20) ; et un conduit d'alimentation en eau chaude (2 3) qui est en communication fluidique avec l'au moins une seconde ouverture (21).

4. Machine selon l'une quelconque des revendications précédentes, dans laquelle le mécanisme (9) est configuré pour pousser le récipient (2) contre le distributeur (7) de manière à fermer une ouverture supérieure (19) du récipient (2) et à former un compartiment de cuisson sensiblement fermé pour la cuisson des aliments (15).

5. Machine selon la revendication 4, dans laquelle le distributeur (7) comprend un couvercle (27) configuré pour fermer le récipient (2).

6. Machine selon l'une quelconque des revendications précédentes, dans laquelle le support (8) est mobile dans une direction sensiblement parallèle à un axe longitudinal (Al).

7. Machine selon la revendication 6, dans laquelle le distributeur (7) s'étend le long de l'axe longitudinal (Al) de la plaque vers le support (8) dans l'espace entre la plaque et le support (8).

8. Machine selon l'une quelconque des revendications précédentes, dans laquelle le mécanisme (9) comprend une barre transversale (32), mobile dans une direction sensiblement parallèle à l'axe longitudinal (Al) et reliée à l'ensemble cinématique (31) du type bielle-manivelle ; et au moins un guide (33), qui s'étend dans une direction parallèle à l'axe longitudinal (Al) et est relié à la barre transversale mobile (32) et au support (8).

9. Machine selon la revendication 8, dans laquelle l'ensemble cinématique (31) du type bielle-manivelle comprend un arbre (36), qui est rotatif autour d'un axe transversal (A 2) par rapport à l'axe longitudinal (Al) et est relié à l'unité de commande (11) ; un corps de manivelle (37) couplé conjointement à l'arbre (36) ; et un corps de bielle (38) ayant une première extrémité (39) articulée au corps de manivelle (37) et une seconde extrémité (40) articulée à la barre transversale mobile (32) .

10. Machine selon la revendication 8 ou 9, dans laquelle l'élément élastique (10) est disposé entre la barre transversale mobile (32) et un élément de blocage (14) fixé au cadre (3) de manière à contrer le mouvement de la barre transversale mobile (32) vers le distributeur (7).

11. Machine selon l'une quelconque des revendications 8 à 10, dans laquelle le mécanisme (9) comprend deux guides latéraux (33) disposés sur des bandes opposées par rapport au distributeur (7), chaque guide latéral (33) étant une tige comprenant une première extrémité (34) reliée à la barre transversale mobile (32) et une seconde extrémité (35) reliée au support (8).

12. Machine selon l'une quelconque des revendications précédentes, dans laquelle l'unité de commande (11) comprend un levier à main (43).
